(19) Europäisches Patentamt
European Patent Office
Office européen des brevets

(11) **EP 4 348 087 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **22727871.0**

(22) Anmeldetag: **05.05.2022**

(51) Internationale Patentklassifikation (IPC):
**F16K 1/52** (2006.01)     **F16K 3/24** (2006.01)
**F16K 47/04** (2006.01)     **F16K 47/08** (2006.01)

(52) Gemeinsame Patentklassifikation (CPC):
**F16K 3/246; F16K 1/52; F16K 47/04; F16K 47/08**

(86) Internationale Anmeldenummer:
**PCT/EP2022/062186**

(87) Internationale Veröffentlichungsnummer:
**WO 2022/248187 (01.12.2022 Gazette 2022/48)**

(54) **DROSSELELEMENT ZUR DRUCKREDUZIERUNG EINES PROZESSFLUIDES**

THROTTLE ELEMENT FOR REDUCING THE PRESSURE OF A PROCESS FLUID

ÉLÉMENT D'ÉTRANGLEMENT POUR RÉDUIRE LA PRESSION D'UN FLUIDE DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2021 DE 202021102939 U**

(43) Veröffentlichungstag der Anmeldung:
**10.04.2024 Patentblatt 2024/15**

(73) Patentinhaber: **Samson Aktiengesellschaft**
**60314 Frankfurt (DE)**

(72) Erfinder:
• **MOHR, Stefan**
**60316 Frankfurt am Main (DE)**
• **WAID, Jonas**
**64293 Darmstadt (DE)**

(74) Vertreter: **Puschmann Borchert Kaiser Klettner Patentanwälte Partnerschaft mbB**
**Bajuwarenring 21**
**82041 Oberhaching (DE)**

(56) Entgegenhaltungen:
**EP-A1- 3 356 194     WO-A1-2013/025421**
**WO-A1-2018/136846     WO-A1-2018/217454**
**CN-A- 109 469 769     DE-A1- 102015 005 611**
**US-A- 2 975 478     US-A1- 2007 240 774**

**Beschreibung**

Die Erfindung betrifft ein Drosselelement zur Druckreduzierung eines Prozessfluides, insbesondere zur Druckreduzierung in einer verfahrenstechnischen Anlage, gemäß dem Anspruch 1 sowie ein Stellventil gemäß der im Oberbegriff des Anspruches 14 angegebenen Art.

In verfahrenstechnischen Anlagen werden bekanntlich Prozessfluidströme in Prozessfluidleitungen über Stellventilen verfahrenstechnischen Prozessen zugeführt. Die Prozessfluidströme sind verfahrens- und betriebsgemäß nach bestimmten Regelgrößen einzustellen, unter anderem im Hinblick auf die Durchflussmenge. Es ist weiterhin hinlänglich bekannt in verfahrenstechnischen Anlagen sogenannte Drosselelemente zur Druckreduzierung vorzusehen.

Derartige Drosselelemente sind aus dem Stand der Technik hinreichend bekannt und umfassen in der Regel einen mehrere Drosselkanäle aufweisenden, von einem Prozessfluid zu durchströmenden Drosselkörper, vgl. DE 10 2015 005 611 A1.

Es ist weiterhin bekannt, dass durch eine entsprechende Ausgestaltung der Drosselkanäle im Drosselkörper eine gezielte Einflussnahme in Hinblick auf die Durchströmung, die Druckreduzierung und Kavitation ermöglicht ist. Neben einer Ausbildung der Drosselkanäle als Rund-, Quadrat- oder Langlöcher mit einem über der gesamten Länge geraden oder gewendelten Verlauf, vgl. DE 10 2015 005 611 A1, sind auch Drosselkanäle mit einer gekrümmten, schrägen, konischen und/oder mit Kanten und/oder Hinterschneidungen versehene Innenwandungen bekannt, siehe DE 10 2016 102 756 A1.

Ein Drosselkörper gemäß dem die Drosselkanäle jeweils eine Einlassöffnung, einen sich in Längsrichtung des Drosselelements erstreckenden Zwischenabschnitt und eine Auslassöffnung umfassen, und gemäß dem die im Wesentlich orthogonal zur Längsrichtung des Drosselkörpers und damit im Wesentlichen orthogonal zum Zwischenabschnitt ausgerichteten Einlassöffnungen in Strömungsrichtung S betrachtet sich kegelstumpfförmig verjüngen, ist in der WO 2018/217454 A1 beschrieben.

Die Anordnung eines Drosselelements in der verfahrenstechnischen Anlage kann auf vielfältige Art und Weise erfolgen: So kann z.B. ein Drosselelement als ein im Stellventil verbautes Bauteil ausgebildet sein, beispielsweise durch Ausbildung des Ventilglieds als Lochkegel, vgl. DE 24 31 322, oder durch Anordnung eines im Stellventil fest verbauten, mit dem Ventilglied zusammenwirkenden Ventilkäfigs, siehe DE 10 2015 016 902 A1.

Alternativ kann ein Drosselelement aber auch unmittelbar in einer Prozessfluidleitung als eine sogenannte Rohrdrossel, beispielsweise im Ein- oder Auslassbereich eines Stellventils, einer Pumpe oder eines sonstigen Feldgerätes zur Druckreduzierung angeordnet sein.

Ein gattungsgemäßes, die Merkmale des Oberbegriffes des Anspruches 1 aufweisendes Drosselelement ist der Offenbarung der CN 109 469 769 A zu entnehmen.

Der Erfindung liegt die Aufgabe zugrunde ein Drosselelement gemäß der im Oberbegriff des Anspruches 1 angegebenen Art derart weiterzubilden, dass ein kavitations- und verschleißreduzierter Betrieb ermöglicht ist.

Diese Aufgabe wird durch die kennzeichnenden Merkmale des Anspruches 1 in Verbindung mit seinen Oberbegriffsmerkmalen gelöst.

Die Unteransprüche 2 bis 13 bilden vorteilhafte Weiterbildung des erfindungsgemäßen Drosselelements.

Der Erfindung liegt die Erkenntnis zugrunde, dass die Geometrie der Eintrittsöffnungen der Drosselkanäle einen entscheidenden Einfluss auf den Strömungsverlauf und damit die Kavitation und den Verschleiß haben.

Das Drosselelement umfasst in bekannter Art und Weise einen vom Prozessfluid zu durchströmender, mehrere Drosselkanäle aufweisenden Drosselkörper. D.h., in Strömungsrichtung S betrachtet weist somit jeder Drosselkanal eine stromaufwärtige Eintrittsöffnung, einen sich daran anschließenden Kanalabschnitt sowie eine stromabwärtige Austrittsöffnung auf.

Erfindungsgemäß ist nunmehr vorgesehen, dass die stromaufwärtigen Eintrittsöffnungen zwei Bereiche, nämlich einen sich in Strömungsrichtung S verjüngenden kegelstumpfförmigen Einlassbereich sowie einen sich daran anschließenden sphärischen bzw. kugelförmigen Bereich, aufweisend ausgebildet sind. Während der kegelstumpfförmige Einlassbereich in Art eine Zentrierung ein verbessertes Einströmen des Prozessfluides in die Eintrittsöffnungen bewirkt, ermöglicht der anschließende sphärische bzw. kugelförmige Bereich eine gleichmäßige Verteilung des Prozessfluides vor Eintritt in die anschließenden Kanalabschnitte der Drosselkanäle. Die erfindungsgemäße Ausgestaltung hat den Effekt, dass - da nunmehr Strömungsabrisse, Toträume und/oder Verwirbelungen weitestgehend vermieden werden und damit nahezu der gesamte Drosselkanalquerschnitt genutzt wird - eine annähernd gleichmäßige Strömungsverteilung gewährleistet ist, was wiederum in vorteilhafter Weise eine reduzierte Kavitations- und Verschleißneigung zur Folge hat. Um beim Einströmen von den kegelstumpfförmigen Einlassbereichen in die anschließenden sphärischen Bereiche die Gefahr des Auftretens von Verwirbelungen weiter zu reduzieren, sind erfindungsgemäß zwischen den kegelstumpfförmigen Einlassbereichen und den sich anschließenden sphärischen Bereichen abgerundete Übergangsbereiche ausgebildet. Abgerundeter Übergangsbereich ist dabei insbesondere so zu verstehen, dass der Übergang zwischen kegelstumpfförmigen Einlassbereich und sphärischen Bereich fließend bzw. kantenlos, also durch ein Vorsehen eines Übergangsradius zwischen den beiden Bereichen, ausgebildet ist.

Um beim Eintreten des Prozessfluides in die Eintrittsöffnungen eine ausreichende "Zentrierung" der Strömung zu gewährleisten, weisen die kegelstumpfförmigen Einlassbereiche der Eintrittsöffnungen vorzugsweise ein einen Kegelwinkel α auf, für den gilt:

$$15° \leq Kegelwinkel\ α \leq 75°.$$

Eine weitere bevorzugte Ausführungsform des erfindungsgemäßen Drosselelements sieht vor, dass die sphärischen Bereiche der Eintrittsöffnungen im Wesentlichen halbkugelförmig ausgebildet sind.

Damit auch ein möglichst verwirbelungsfreies Einströmen von den sphärischen Bereichen in die anschließenden Kanalabschnitte der Drosselkanäle gewährleistet ist, ist gemäß einer weiteren bevorzugten Ausführungsform vorgesehen, dass die sphärischen Bereiche der Eintrittsöffnungen abgerundet und/oder tangential in die sich anschließenden Kanalabschnitte der Drosselkanäle übergehen.

Vorzugsweise weisen die Kanalabschnitte einen kreisförmigen Kanalquerschnitt auf. Denkbar sind aber auch von einer Kreisform abweichende Kanalquerschnitte, insbesondere ovale oder polygonale mit abgerundeten Ecken.

Eine weitere bevorzugte Ausführungsform des erfindungsgemäßen Drosselelements, zeichnet sich dadurch aus, dass die Kanalabschnitte der Drosselkanäle in Strömungsrichtung S und ausgehend vom sphärischen Bereich bis zur Austrittsöffnung einen kontinuierlich zunehmenden Kanalquerschnitt aufweisend ausgebildet sind. Der kontinuierlich zunehmende Kanalquerschnitt hat den Effekt, dass beim Durchströmen ein Ansteigen der Prozessfluidgeschwindigkeit verhindert wird, wodurch in vorteilhafter Weise die aus zu hohen Prozessfluidgeschwindigkeiten resultierenden Materialschädigungen am Drosselkörper erfolgreich vermieden werden und somit eine längere Standzeit sichergestellt ist.

Bevorzugt sind dabei die stromaufwärtigen Eintrittsöffnungen der Drosselkanäle eine gleiche Geometrie aufweisend ausgebildet. Mit anderen Worten, die Eintrittsöffnungen sind alle gleich, insbesondere einen identischen Kegelwinkel α aufweisend, ausgebildet. Vorteilhaft an dieser Ausführungsform ist, dass hierdurch eine vereinfachte und damit kostengünstige Herstellung ermöglicht ist.

Denkbar ist aber auch, dass die stromaufwärtigen Eintrittsöffnungen unterschiedliche Geometrien aufweisend ausgebildet sind. Hierdurch ist in vorteilhafter Weise gewährleistet, dass eine Anpassung an vorhandenen Randbedingungen, wie beispielsweise die Lage der Eintrittsöffnungen in Bezug zu einem Ventilein- und Ventilauslass, ermöglicht ist.

Gemäß einer Ausführungsform des erfindungsgemäßen Drosselelements sind die Eintrittsöffnungen eine im Wesentlichen elliptischen Umfangskontur aufweisend ausgebildet.

Bevorzugt wird dabei das Drosselelement schichtweise, durch ein additives Herstellungsverfahren, insbesondere durch ein Lasersinterverfahren oder ein Laserschmelzverfahren, hergestellt, gemäß dem ein selektiver Materialauftragungsvorgang oder ein selektiver Materialaushärtungsvorgang anhand der vorgegebenen geometrischen Daten des Drosselelements gesteuert wird. Als vorteilhaft erweist sich hierbei, dass durch die Herstellung des Drosselelements mittels eines additiven Herstellungsverfahrens neben einer schnellen Herstellung (es entfällt die zeitintensive Entwicklung/Herstellung von Werkzeugen/Formen), auch komplexe Geometrien bzw. Strukturen einfach und kostengünstig zu realisieren sind.

Eine alternative Ausführungsform der Erfindung sieht vor, dass das Drosselelement durch ein Gussverfahren hergestellt ist.

Bevorzugt ist dabei das mittels eines additiven Herstellungsverfahrens oder mittels Gussverfahren hergestellte Drosselelement aus Metall bzw. aus einer Metalllegierung hergestellt.

Der Erfindung liegt des Weiteren die Aufgabe zugrunde ein Stellventil für eine verfahrenstechnische Anlage gemäß der im Oberbegriff des Patentanspruches 14 angegebenen Art derart weiterzubilden, dass ein in Bezug auf Kavitation und Verschleiß optimierter Betrieb des Stellventils ermöglicht ist.

Diese Aufgabe wird durch die kennzeichnenden Merkmale des Patentanspruches 14 in Verbindung mit seinen Oberbegriffsmerkmalen gelöst.

In bekannter Art und Weise umfasst das Stellventil ein Ventilgehäuse mit einem Ventileinlass und einem Ventilauslass, sowie ein zwischen dem Ventilein- und Ventilauslass angeordnetes Drosselelement.

Erfindungsgemäß ist nunmehr vorgesehen, dass das Drosselelement nach einem der Ansprüche 1 bis 13 ausgebildet ist.

Sämtliche Ausführungen zum erfindungsgemäßen Drosselelement lassen sich analog auf das erfindungsgemäße Stellventil übertragen, sodass mit diesem die zuvor genannten Vorteile erzielt werden.

Gemäß einer ersten Ausführungsform des erfindungsgemäßen Stellventils ist das Drosselelement als ein - in Bezug zu einem gehäusefesten Ventilsitz betrachtet - relativ bewegbarer Ventilkegel ausgebildet.

Eine alternative zweite Ausführungsform des erfindungsmäßen Stellventils zeichnet sich dadurch aus, dass das Drosselelement als ein im Ventilgehäuse fest verbauter, mit einem im Ventilgehäuse verfahrbar gelagerten Ventilglied zusammenwirkender Ventilkäfig ausgebildet ist.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste

der Bezugzeichen verwendeten Begriffe und zugeordneten Bezugzeichen verwendet. In der Zeichnung bedeutet:

Fig. 1    ein Stellventil mit einem als Ventilkäfig ausgebildeten Drosselelement in einer Schnittdarstellung;

Fig. 2    einen vergrößerten Ausschnitt des Ventilkäfigs aus Fig. 1, und

Fig. 3    eine vergrößerte Darstellung einer Eintrittsöffnung.

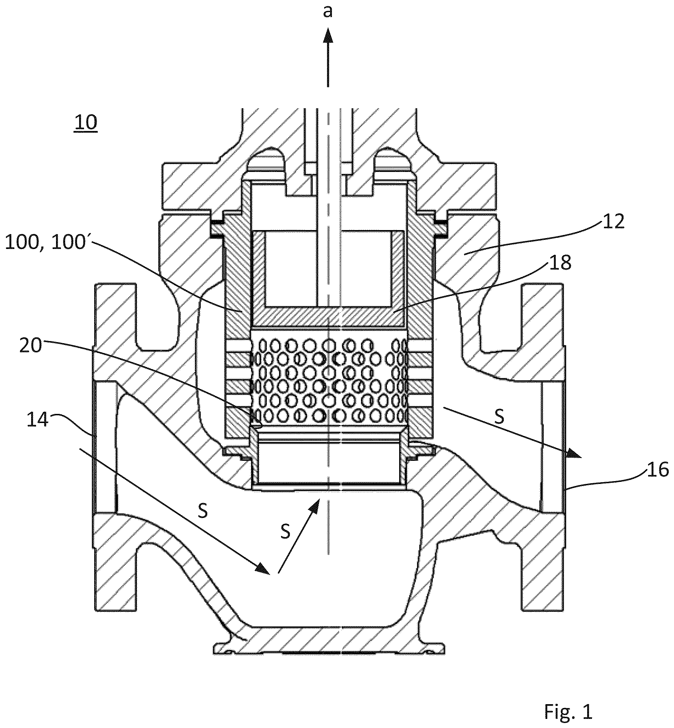

Fig. 1 zeigt ein insgesamt mit der Bezugsziffer 10 bezeichnetes Stellventil für eine verfahrenstechnische Anlage. Das Stellventil 10 umfasst ein Ventilgehäuse 12 mit einem Ventileinlass 14 und einem Ventilauslass 16, ein im Ventilgehäuse 12 des Stellventils 10 in axialer Richtung a verfahrbar gelagertes Ventilglied 18 sowie ein im Strömungskanal des Ventilgehäuses 12, also zwischen Ventileinlass 14 und Ventilauslass 16 angeordnetes, insgesamt mit der Bezugsziffer 100 bezeichnetes Drosselelement.

Das Drosselelement 100 ist vorliegend als ein fest im Ventilgehäuse 12 verbauter, mit dem Ventilglied 18 zusammenwirkender Ventilkäfig ausgebildet. Derartige, einen Ventilkäfig aufweisende Stellventile werden auch als Käfigventil bezeichnet. Der als Drosselelement ausgebildete Ventilkäfig ist im Folgenden mit dem Bezugszeichen 100' bezeichnet.

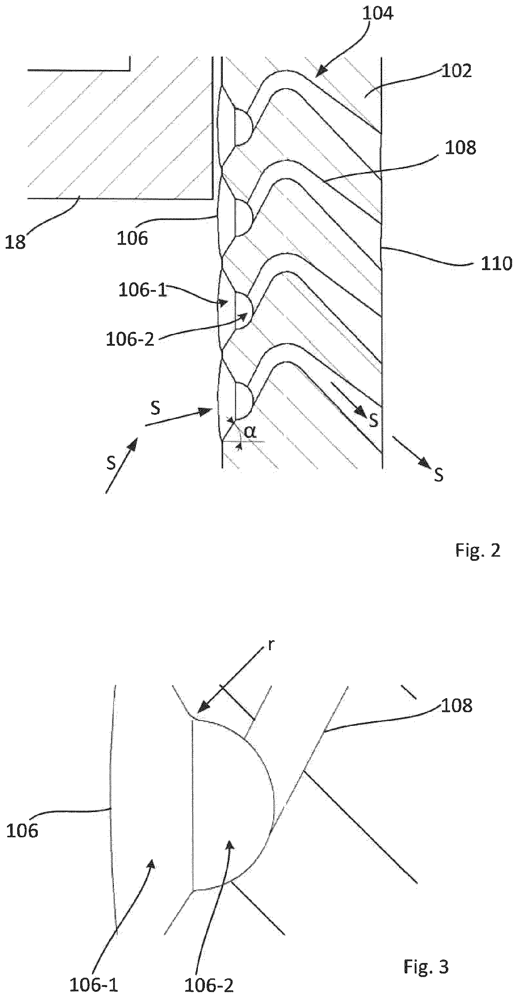

Wie Fig. 1 weiter zeigt, ist der Ventilkäfig 100' hülsenförmig ausgebildet und umfasst einen in axialer Richtung a betrachtet oberen, das Ventilglied 18 axial führenden Führungsbereich sowie einen darunterliegenden, mehrere in axialer Richtung a und in Umfangsrichtung u betrachtet verteilt angeordnete, die Wandung 102 des hülsenförmigen Ventilkäfigs 100' durchdringende Drosselkanäle 104. Jeder Drosselkanal 104 weist dabei eine mit der Bezugsziffer 106 bezeichnete stromaufwärtige bzw. ventilkäfiginnenseitige Eintrittsöffnung, einen mit der Bezugsziffer 108 bezeichneten Kanalabschnitt sowie einen mit der Bezugsziffer 110 bezeichnete stromabwärtige bzw. ventilkäfigaußenseitige Austrittsöffnung auf, vgl. Fig. 2.

Wie in Fig. 1 und in Fig. 2 durch die die Durchströmungsrichtung S symbolisierenden Pfeile ersichtlich, tritt ein Prozessfluid über den Ventileinlass 14 in das Stellventil 10 ein und strömt über die untere Stirnfläche in das Innere des hülsenförmigen Ventilkäfigs 100'. Über die stromaufwärtigen bzw. ventilkäfiginnenseitigen Eintrittsöffnungen 106 gelangt das Prozessfluid in die Kanalabschnitte 108 und tritt im Anschluss über die stromabwärtigen bzw. ventilkäfigaußenseitigen Austrittsöffnungen 110 aus den Drosselkanälen 104 und damit dem Ventilkäfig 100' wieder aus, um anschließend aus dem Ventilauslass 16 aus dem Stellventil 10 wieder auszuströmen.

Über eine entsprechende axiale Positionierung des Ventilglieds 18 in Bezug zum Ventilkäfig 100' kann somit in bekannter Art und Weise die Anzahl der verschlossenen bzw. geöffneten Drosselkanäle 104, also die Öffnungsweite des Ventilkäfigs 100'und damit die Drosselquote eingestellt werden.

Zum vollständigen Schließen des Stellventils 10, umfasst das Stellventil 10 ferner einen mit dem Ventilglied 18 zusammenwirkenden, komplementär zum Ventilglied 18 ausgebildeten Ventilsitz 20.

Ein bekanntes Problem derartiger, einen Ventilkäfig 100' aufweisender Stellventile 10 ist, dass gerade in den Übergangsbereichen vom Ventilglied 18 zu den Eintrittsöffnungen 106 des Ventilkäfigs diffuse Strömungen auftreten können, sodass das Prozessfluid nicht gleichmäßig in die Drosselkanäle 104 gelangen kann.

Hier setzt nun die Erfindung ein:
Der Erfindung liegt die Erkenntnis zugrunde, dass die Einlassgeometrie, d.h. die Ausgestaltung der stromaufwärtigen bzw ventilkäfiginnenseitigen Eintrittsöffnungen 106 entscheidend für den Strömungsverlauf und die Reduzierung von Kavitation sowie Verschleiß ist.

Wie insbesondere aus Fig. 2 ersichtlich, sind erfindungsgemäß die stromaufwärtigen bzw ventilkäfiginnenseitigen Eintrittsöffnungen 106 zwei Bereiche, nämlich einen sich in Strömungsrichtung S verjüngenden kegelstumpfförmigen Einlassbereich 106-1 sowie einen sich daran anschließenden sphärischen Bereich 106-2, aufweisend ausgebildet. Wie aus Fig. 2 weiter ersichtlich ist vorliegend der sphärische Bereich 106-2 halbkugelförmig ausgebildet.

Die erfindungsgemäße Ausgestaltung der Eintrittsöffnungen 106 hat den Effekt, dass der kegelstumpfförmige Einlassbereich 106-1 in Art einer "Zentrierung" ein verbessertes Einströmen des Prozessfluides ermöglicht und dass durch den sich anschließende sphärische Bereich 106-2 eine gleichmäßige Verteilung des Prozessfluides sichergestellt ist. D.h. Strömungsabrisse, Toträume und/oder Verwirbelungen werden weitestgehend vermieden und nahezu der gesamte Drosselkanalquerschnitt wird genutzt. Hierdurch ist in vorteilhafter Weise eine annähernd gleichmäßige Strömungsverteilung gewährleistet, sodass die Kavitationsneigung reduziert ist und weniger Verschleiß auftritt.

Vorliegend sind dabei die kegelstumpfförmigen Einlassbereiche 106-1 der Eintrittsöffnungen 106 einen Kegelwinkel $\alpha$ von

$$15° \leq \text{Kegelwinkel } (\alpha) \leq 75°$$

aufweisend ausgebildet. Wie erste Versuche gezeigt haben, ist bei Ausbildung der kegelstumpfförmigen Einlassbereiche 106-1 gemäß dem angegebenen Kegelwinkelintervall eine ausreichende Kegelverjüngung für die beabsichtigte Strömungszentrierung gewährleistet.

Um zudem beim Ausströmen des Prozessfluides aus den kegelstumpfförmigen Einlassbereichen 106-1 und anschließenden Einströmen in die sphärischen Bereiche 106-2 Verwirbelungen zu vermeiden, ist der Übergang zwischen den kegelstumpfförmigen Einlassbereichen 106-1 und den sich anschließenden sphärischen Bereichen 106-2 fließend ausgebildet. Hierzu ist, wie insbesondere aus Fig. 3 ersichtlich, zwischen den beiden Bereichen ein Übergangsradius r vorgesehen, sodass die beiden Bereiche 106-1 und 106-2 kantenlos ineinander übergehen.

**Bezugszeichenliste**

| 10 | Stellventil |
| 12 | Ventilgehäuse |
| 14 | Ventileinlass |
| 16 | Ventilauslass |
| 18 | Ventilglied |
| 20 | Ventilsitz |
| 100 | Drosselelement |
| 100' | Ventilkäfig |
| 102 | Wandung des als Ventilkäfig |
| 104 | Drosselkanäle |
| 106 | Eintrittsöffnung |
| 106-1 | kegelstumpfförmiger Einlassbereich |
| 106-2 | sphärischer Bereich |
| 108 | Kanalabschnitt |
| 110 | Austrittsöffnung |

| a | axiale Richtung |
| S | Strömungsrichtung |
| r | Radius |
| α | Kegelwinkel |

**Patentansprüche**

1. Drosselelement (100) zur Druckreduzierung eines Prozessfluides, umfassend einen vom Prozessfluid zu durchströmender, mehrere Drosselkanäle (104) aufweisender Drosselkörper, wobei jeder Drosselkanal (104) in Strömungsrichtung (S) betrachtet eine stromaufwärtige Eintrittsöffnung (106), einen Kanalabschnitt (108) und eine stromabwärtige Austrittsöffnung (110) aufweist, **dadurch gekennzeichnet, dass** die Eintrittsöffnungen (106) einen sich in Strömungsrichtung (S) verjüngenden kegelstumpfförmigen Einlassbereich (106-1) und einen sich daran anschließenden sphärischen Bereich (106-2) aufweisend ausgebildet sind und dass zwischen den kegelstumpfförmigen Einlassbereichen (106-1) und den sich daran anschließen sphärischen Bereichen (106-2) der Eintrittsöffnungen (106) ein abgerundeter Übergangsbereich ausgebildet ist.

2. Drosselelement (100) nach Anspruch 1, **dadurch gekennzeichnet, dass** die kegelstumpfförmigen Einlassbereiche (106-1) der Eintrittsöffnungen (106) einen Kegelwinkel (α) aufweisen, für den gilt:

$$15° \leq \text{Kegelwinkel (α)} \leq 75°.$$

3. Drosselelement (100) nach Anspruch 1 oder 2, **dadurch gekennzeichnet, dass** die sphärischen Bereiche (106-2) der Eintrittsöffnungen (106) halbkugelförmig ausgebildet sind.

4. Drosselelement (100) nach einem der vorgenannten Ansprüche, **dadurch gekennzeichnet, dass** der sphärische Bereich (106-2) der Eintrittsöffnungen (106) abgerundet und/oder tangential in den sich anschließenden Kanalabschnitt (108) des Drosselkanals (104) übergeht.

5. Drosselelement (100) nach einem der vorgenannten Ansprüche, **dadurch gekennzeichnet, dass** die Kanalabschnitte (108) der Drosselkanäle (104) einen kreisförmigen Kanalquerschnitt aufweisen.

6. Drosselelement (100) nach einem der vorgenannten Ansprüche, **dadurch gekennzeichnet, dass** die Kanalabschnitte (108) der Drosselkanäle (104) in Strömungsrichtung (S) und ausgehend vom sphärischen Bereich (106-1) bis zur Austrittsöffnung (110) einen kontinuierlich zunehmenden Kanalquerschnitt aufweisend ausgebildet sind.

7. Drosselelement (100) nach einem der vorgenannten Ansprüche, **dadurch gekennzeichnet, dass** die Eintrittsöffnungen (106) eine gleiche Geometrie aufweisend ausgebildet sind.

8. Drosselelement (100) nach einem der Ansprüche 1 bis 6, **dadurch gekennzeichnet, dass** die Eintrittsöffnungen (106) unterschiedliche Geometrien aufweisend ausgebildet sind.

9. Drosselelement (100) nach einem der Ansprüche 1 bis 6, **dadurch gekennzeichnet, dass** die Eintrittsöffnungen (106) elliptisch ausgebildet sind.

10. Drosselelement (100) nach einem der vorgenannten Ansprüche, **dadurch gekennzeichnet, dass** das Drosselelement (100) schichtweise durch ein additives Herstellungsverfahren hergestellt ist.

11. Drosselelement (100) nach Anspruch 10, **dadurch gekennzeichnet, dass** es sich bei dem additiven Herstellungsverfahren um ein Lasersinterverfahren oder ein Laserschmelzverfahren handelt.

12. Drosselelement (100) nach einem der Ansprüche 1 bis 19, **dadurch gekennzeichnet, dass** das Drosselelement (100) durch ein Gußverfahren hergestellt ist.

13. Drosselelement (100) nach einem der vorgenannten Ansprüche, **dadurch gekennzeichnet, dass** das Drosselelement (100) aus einem metallischen Werkstoff hergestellt ist.

14. Stellventil (10), umfassend ein Ventilgehäuse (12) mit einem Ventileinlass (14) und einem Ventilauslass (16), sowie ein zwischen dem Ventilein- und Ventilauslass (14, 16) angeordnetes Drosselelement (100), **dadurch gekennzeichnet, dass** das Drosselelement (100) nach einem der Ansprüche 1 bis 13 ausgebildet ist.

15. Stellventil (10) nach Anspruch 14, **dadurch gekennzeichnet, dass** das Drosselelement (100) als ein in Bezug zu einem gehäusefesten Ventilsitz (20) betrachtet, relativ bewegbares Ventilglied ausgebildet ist.

16. Stellventil (10) nach Anspruch 14, **dadurch gekennzeichnet, dass** das Drosselelement (100) als ein gehäusefester, mit einem im Ventilgehäuse (12) verfahrbar gelagerten Ventilglied (18) zusammenwirkender Ventilkäfig (100') ausgebildet ist.

**Claims**

1. Throttle element (100) for reducing the pressure of a process fluid, comprising a throttle body through which process fluid flows and which has multiple throttle channels (104), with each throttle channel (104) having an upstream inlet opening (106), a channel section (108) and a downstream outlet opening (110), as viewed in the direction of flow (S), **characterized in that** the inlet openings (106) are designed such that they have a frusto-conical inlet region (106-1) which tapers in the direction of flow (S) and an adjoining spherical region (106-2), and **in that** a rounded transition region is formed between the frusto-conical inlet regions (106-1) and the adjoining spherical regions (106-2) of the inlet openings (106).

2. Throttle element (100) according to claim 1, **characterized in that** the frusto-conical inlet regions (106-1) of the inlet openings (106) have a cone angle ($\alpha$) which satisfies the following condition:

$$15° \leq \text{cone angle } (\alpha) \leq 75°.$$

3. Throttle element (100) according to any one of claims 1 or 2 above, **characterized in that** the spherical regions (106-2) of the inlet openings (106) are semi-spherical in shape.

4. Throttle element (100) according to any one of the preceding claims, **characterized in that** the spherical region (106-2) of the inlet openings (106) transitions in a rounded and/or a tangential manner into the adjoining channel section (108) of the throttle channel (104).

5. Throttle element (100) according to any one of the preceding claims, **characterized in that** the channel sections (108) of the throttle channels (104) have a circular channel cross-section.

6. Throttle element (100) according to any one of the aforementioned claims, **characterized in that** the channel sections (108) of the throttle channels (104) are designed to have a continuously increasing channel cross-section in the flow direction (S) and starting from the spherical region (106-1) up to the outlet opening (110).

7. Throttle element (100) according to any one of the preceding claims, **characterized in that** the inlet openings (106) are designed to have the same geometry.

8. Throttle element (100) according to any one of claims 1 to 6 above, **characterized in that** the inlet openings (106) are designed to have different geometries.

9. Throttle element (100) according to any one of claims 1 to 6 above, **characterized in that** the inlet openings (106) are designed to be elliptical in shape.

10. Throttle element (100) according to any one of the preceding claims, **characterized in that** the throttle element (100) is manufactured layer by layer using an additive manufacturing process.

11. Throttle element (100) according to claim 10, **characterized in that** the additive manufacturing process used is a laser sintering process or a laser melting process.

12. Throttle element (100) according to any one of claims 1 to 19 above, **characterized in that** the throttle element (100) is manufactured using a casting process.

13. Throttle element (100) according to any one of the preceding claims, **characterized in that** the throttle element (100) is made of a metallic material.

14. Control valve (10), comprising a valve housing (12) with a valve inlet (14) and a valve outlet (16), as well as a throttle element (100) arranged between the valve inlet and valve outlet (14, 16), **characterized in that** the throttle element (100) is of the type specified in any one of claims 1 to 13 above.

**15.** Control valve (10) according to claim 14, **characterized in that** the throttle element (100) is designed as a valve member that can be moved relative to a valve seat (20) that is fixed to the housing.

**16.** Control valve (10) according to claim 14, **characterized in that** the throttle element (100) is designed as a valve cage (100') which is fixed to the housing and is designed to interact with a valve member (18) mounted in the valve housing (12) such that it can be moved therein.

## Revendications

**1.** Elément d'étranglement (100) pour réduire la pression d'un fluide de traitement, comprenant un corps d'étranglement destiné à être traversé par le fluide de traitement, présentant plusieurs canaux d'étranglement (104), dans lequel chaque canal d'étranglement (104) présente vu dans la direction d'écoulement (S) une ouverture d'entrée (106) amont, une section de canal (108) et une ouverture de sortie (110) aval, **caractérisé en ce que** les ouvertures d'entrée (106) sont réalisées de manière à présenter une zone d'admission tronconique (106-1) s'amincissant dans la direction d'écoulement (S) et une zone sphérique (106-2) adjacente à celle-ci et qu'une zone de transition arrondie est réalisée entre les zones d'admission tronconiques (106-1) et les zones sphériques (106-2) adjacente à celles-ci des ouvertures d'entrée (106).

**2.** Elément d'étranglement (100) selon la revendication 1, **caractérisé en ce que** les zones d'admission tronconiques (106-1) des ouvertures d'entrée (106) présentent un angle de cône ($\alpha$) pour lequel s'applique :

$$15° \leq \text{angle de cône } (\alpha) \leq 75°.$$

**3.** Elément d'étranglement (100) selon la revendication 1 ou 2, **caractérisé en ce que** les zones sphériques (106-2) des ouvertures d'entrée (106) sont réalisées de manière hémisphérique.

**4.** Elément d'étranglement (100) selon l'une quelconque des revendications précédentes, **caractérisé en ce que** la zone sphérique (106-2) des ouvertures d'entrée (106) se prolonge de manière arrondie et/ou tangentielle en la section de canal (108) adjacente du canal d'étranglement (104).

**5.** Elément d'étranglement (100) selon l'une quelconque des revendications précédentes, **caractérisé en ce que** les sections de canal (108) des canaux d'étranglement (104) présentent une section transversale de canal circulaire.

**6.** Elément d'étranglement (100) selon l'une quelconque des revendications précédentes, **caractérisé en ce que** les sections de canal (108) des canaux d'étranglement (104) sont réalisées de manière à présenter une section transversale de canal augmentant en continu dans la direction d'écoulement (S) et à partir de la zone sphérique (106-1) jusqu'à l'ouverture de sortie (110).

**7.** Elément d'étranglement (100) selon l'une quelconque des revendications précédentes, **caractérisé en ce que** les ouvertures d'entrée (106) sont réalisées de manière à présenter une géométrie identique.

**8.** Elément d'étranglement (100) selon l'une quelconque des revendications 1 à 6, **caractérisé en ce que** les ouvertures d'entrée (106) sont réalisées de manière à présenter des géométries différentes.

**9.** Elément d'étranglement (100) selon l'une quelconque des revendications 1 à 6, **caractérisé en ce que** les ouvertures d'entrée (106) sont réalisées de manière elliptique.

**10.** Elément d'étranglement (100) selon l'une quelconque des revendications précédentes, **caractérisé en ce que** l'élément d'étranglement (100) est fabriqué couche par couche par un procédé de fabrication additive.

**11.** Elément d'étranglement (100) selon la revendication 10, **caractérisé en ce que** le procédé de fabrication additive est un procédé de frittage par laser ou un procédé de fusion par laser.

**12.** Elément d'étranglement (100) selon l'une quelconque des revendications 1 à 19, **caractérisé en ce que** l'élément d'étranglement (100) est fabriqué par un procédé de coulée.

**13.** Elément d'étranglement (100) selon l'une quelconque des revendications précédentes, **caractérisé en ce que** l'élément d'étranglement (100) est fabriqué à partir d'un matériau métallique.

**14.** Soupape de commande (10), comprenant un carter de soupape (12) avec une entrée de soupape (14) et une sortie de soupape (16), ainsi qu'un élément d'étranglement (100) disposé entre l'entrée de soupape et la sortie de soupape (14, 16), **caractérisé en ce que** l'élément d'étranglement (100) est réalisé selon l'une quelconque des revendications 1 à 13.

**15.** Soupape de commande (10) selon la revendication 14, **caractérisé en ce que** l'élément d'étranglement (100) est réalisé sous la forme d'un élément de soupape relativement mobile vu par rapport à un siège de soupape (20) fixé au carter.

16. Soupape de commande (10) selon la revendication 14, **caractérisé en ce que** l'élément d'étranglement (100) est réalisé sous la forme d'une cage de soupape (100') fixée au carter, coopérant avec un organe de soupape (18) monté déplaçable dans le carter de soupape (12).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015005611 A1
- DE 102016102756 A1
- WO 2018217454 A1
- DE 2431322
- DE 102015016902 A1
- CN 109469769 A